# DEMANDE DE BREVET EUROPEEN

(11) **EP 3 819 050 A1**
(43) Date de publication de la demande: **12.05.2021**
(21) Numéro de dépôt: 19207226.2
(22) Date de dépôt: 05.11.2019
(51) Int. Cl.: B23B 5/32

(54) **TOUR EN FOSSE MODULAIRE ET PORTATIF**

(71) Demandeur: Sogema Engineering, 59390 Lys Lez Lannoy (FR)
(72) Inventeur: Oberlé, Jean-Paul, 59810 Lesquin (FR); Delannoy, Fabrice, 59554 Bantigny (FR)
(74) Mandataire: Pronovem

(57) **Abrégé**

Installation constituée d'un ensemble comprenant un tour modulaire (1) pour le reprofilage des roues d'un véhicule ferroviaire et deux socles (6), ledit tour étant adapté pour être placé dans une fosse (2) au-dessus de laquelle passent des rails d'accès (5), et lesdits socles (6) étant adaptés pour être fixés dans le fond de ladite fosse (2) à une certaine distance l'un de l'autre transversalement par rapport à la direction définie par les rails d'accès, ledit tour modulaire (1) comprenant au moins les éléments modulaires constitutifs suivants :
- deux bâtis latéraux (7) aptes à être solidarisés de manière amovible respectivement sur chacun des deux socles (6) ;
- une poutre centrale (8) apte à être solidarisée de manière amovible aux deux bâtis latéraux (7) de manière à créer une liaison transversale ;
- deux bras porte-galets d'entraînement (9) fixés de manière amovible respectivement sur chacun des bâtis latéraux (7), et comprenant chacun deux galets d'entraînement (10) permettant, en utilisation, de faire tourner une roue (3) du véhicule ferroviaire ;
- un système de calage externe (11) permettant, en utilisation, de maintenir un essieu (4) du véhicule ferroviaire à une hauteur de référence déterminée ;
de sorte que ledit tour modulaire (1) puisse être démonté, respectivement remonté et solidarisé, de manière amovible, d'une pièce par rapport aux deux socles (6);
chaque bâti latéral (7) comprenant une cavité (17) coopérant par emboîtement avec un plot (16) respectif du socle (6) pour positionner et aligner ledit tour modulaire (1) sur lesdits socles (6).

## Description

### Objet de l'invention

La présente invention concerne le domaine des équipements de maintenance ferroviaire, et se rapporte plus particulièrement à une installation pour reprofiler les roues d'un véhicule ferroviaire, appelé communément tour à reprofiler ou tour en fosse. La particularité du tour de la présente invention est qu'il s'agit d'un tour en fosse modulaire et portatif, facilement déplaçable.

### Arrière-plan technologique et état de la technique

L'utilisation d'un véhicule ferroviaire engendre une usure progressive des bandes de roulement des roues au contact avec les rails. En général, cette usure n'est pas uniforme et il est nécessaire de reprofiler les roues du véhicule. Grâce à un tour en fosse, le reprofilage peut être réalisé par usinage des roues sans démontage des essieux. Dans une installation de ce type, le véhicule ferroviaire est amené sur des rails au-dessus de la fosse dans laquelle est placé le tour. Afin de pouvoir fournir un accès aux roues à usiner, les rails situés au-dessus du tour sont escamotables. L'opération d'escamotage des rails est bien connue, comme c'est expliqué par exemple dans le document EP 0 332 489 A1. En premier lieu, le véhicule reposant sur les rails se trouvant au-dessus de la fosse est maintenu en hauteur par des appuis, positionnés par exemple sous les boîtes de roulement des essieux. Après cette opération de blocage, les portions de rails situées directement au-dessus du tour en fosse sont escamotées pour permettre un libre accès aux roues à profiler. Une fois ces portions de rails enlevées, un dispositif de mesure détermine les corrections à appliquer en plusieurs points pris sur le pourtour des roues et un reprofilage est exécuté en fonction de ces mesures. Les rails escamotés sont enfin replacés au-dessus de la fosse pour évacuer le véhicule une fois le reprofilage terminé.

Un tour classique, situé en fosse, comprend généralement deux galets d'entraînement pour chacune des roues, montés sur un bras porte-galets. Les galets d'entraînement permettent de faire tourner les roues lors des prises de mesure et de l'usinage précités. Le tour comprend également un chariot comprenant une tête de mesure et un chariot d'usinage comprenant un porte-outils.

Le document WO 2019/034333 A1 divulgue un tour en fosse permettant le traitement simultané de plusieurs jeux de roues d'un véhicule ferroviaire. Ceci permet un gain de temps, mais le dispositif est plus onéreux et bien plus encombrant qu'un tour en fosse classique.

Le document ES 2 396 386 décrit un tour en fosse qui est de largeur adaptable. De cette manière, des véhicules ferroviaires ayant des espacements entre roues différents peuvent être pris en charge par un même tour situé dans une même fosse. Les voies d'accès peuvent être écartées grâce à une procédure de changement de largeur.

Les documents respectifs EP 2 710 283 A1 et EP 2 667 149 A1 décrivent des procédés et dispositifs de mesure pour déterminer les géométries des roues avant le profilage de celles-ci. Les tours en fosse décrits dans ces documents sont des tours en fosse classiques.

Les tours en fosse de l'état de la technique ont le désavantage d'être encombrants, lourds et onéreux, et pour la plupart, de n'être adaptés qu'à un seul espacement spécifique entre les rails. Par ailleurs, les fosses de ces tours doivent être de très grandes dimensions pour accueillir l'ensemble de l'installation, engendrant un coût élevé de génie civil ainsi qu'un besoin de place non négligeable.

### Buts de l'invention

La présente invention a pour but de pallier les inconvénients de l'état de la technique.

Le tour en fosse selon l'invention doit pouvoir être utilisé pour tous types de matériels roulants tels que tramway, métro, voitures de voyageurs, locomotives, etc. et être évolutif, c'est-à-dire ne nécessiter aucune modification majeure en vue d'une adaptation à un nouveau matériel roulant.

En particulier, la présente invention vise à réaliser un tour en fosse déplaçable et transportable, offrant une grande flexibilité pour l'utilisateur qui peut de ce fait utiliser un même tour dans plusieurs fosses différentes, situées par exemple dans différents ateliers. En d'autres termes, on vise à mutualiser un seul tour entre plusieurs ateliers. Le tour doit ainsi pouvoir être déplacé autant de fois que souhaité, et être adapté à un remontage et alignement aisés grâce à un système de positionnement précis, prédéfini.

Le tour de la présente invention se doit d'être compact, rigide, allégé et de dimensions et/ou d'encombrement réduits par rapport à un tour classique de l'état de la technique. Ceci a pour but de permettre une diminution considérable du volume de la fosse accueillant un tel tour. En effet, le tour doit pouvoir être placé dans une fosse de visite classique pour véhicules ferroviaires et sans nécessiter la construction d'une fosse spécifique, de plus grande dimension comme c'est le cas pour les tours de l'état de la technique. Il s'ensuit une diminution de coût ainsi qu'un gain de place et une diminution de poids pour un transport sur un camion standard.

### Brève description des Figures

Les figures 1A et 1B représentent une vue générale en perspective d'une forme d'exécution de tour en fosse selon l'invention, respectivement sans et avec essieu de véhicule ferroviaire à reprofiler.
La figure 2 représente le tour selon la figure 1, mis en fosse et dont les rails d'accès sont représentés.
La figure 3 représente une vue des socles dans le cas de l'exemple de tour précité.
La figure 4 représente une vue des bâtis latéraux dans le cas de l'exemple de tour précité.
La figure 5A représente une vue de la poutre centrale dans le cas de l'exemple de tour précité. La figure 5B illustre un ensemble montrant la poutre de la figure 5A une fois placée entre les bâtis latéraux selon l'exemple de tour précité.
La figure 6A représente une vue des bras porte-galets d'entraînement selon l'exemple de tour précité. La figure 6B est une vue de détail d'un bras selon la figure 6A montrant le système de calage externe.
La figure 7 représente une vue du chariot porte-outils selon l'exemple de tour précité.
La figure 8 représente une vue de la tête de mesure selon l'exemple de tour précité.
La figure 9 représente une vue du système d'axe horizontal pour le déplacement du chariot mobile dans un exemple de tour selon l'invention.
La figure 10 représente une vue de détail du système de calage externe selon l'exemple de tour précité.

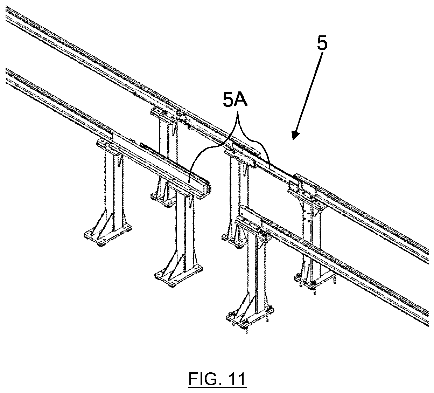

La figure 11 représente une vue des rails d'accès montrant la portion escamotable des rails.

### Principaux éléments caractéristiques de l'invention

La présente invention se rapporte à une installation constituée d'un ensemble comprenant un tour modulaire pour le reprofilage des roues d'un véhicule ferroviaire et deux socles, ledit tour étant adapté pour être placé dans une fosse au-dessus de laquelle passent des rails d'accès, qui définissent une largeur de voie déterminée, et lesdits socles étant adaptés pour être fixés dans le fond de ladite fosse à une certaine distance l'un de l'autre transversalement par rapport à la direction définie par les rails d'accès, ledit tour modulaire comprenant au moins les éléments modulaires constitutifs suivants :
- deux bâtis latéraux aptes à être solidarisés de manière amovible respectivement sur chacun des deux socles ;
- une poutre centrale apte à être solidarisée de manière amovible aux deux bâtis latéraux de manière à créer une liaison transversale ;
- deux bras porte-galets d'entraînement fixés de manière amovible respectivement sur chacun des bâtis latéraux, et comprenant chacun deux galets d'entraînement permettant, en utilisation, de faire tourner une roue du véhicule ferroviaire ;
- un système de calage externe permettant, en utilisation, de maintenir un essieu du véhicule ferroviaire à une hauteur de référence déterminée ;
de sorte que ledit tour modulaire puisse être démonté, respectivement remonté et solidarisé, de manière amovible, d'une pièce par rapport aux deux socles ;
ledit ensemble comprenant en outre un système de centrage de précision pour positionner et aligner ledit tour modulaire (1) dans la fosse (2) sur lesdits socles (6) à chaque fois qu'il doit être remonté.

Selon des modes particuliers de l'invention, l'installation comporte en outre au moins une des caractéristiques suivantes ou une combinaison appropriée de plusieurs d'entre elles :
- le système de centrage de précision comprend au moins un plot compris dans une surface supérieure de chaque socle et au moins une cavité correspondante prévue dans la base de chaque bâti latéral, ladite cavité coopérant par emboîtement avec ledit plot afin de positionner avec précision, et avant fixation, le tour modulaire sur les socles dans la fosse ;
- le tour modulaire comprend un chariot mobile unique pouvant se déplacer transversalement d'une roue à l'autre d'un essieu et équipé soit d'une tête de mesure pour la détection de défauts sur les roues et pour la mesure du positionnement de la roue dans l'espace, soit d'un outillage d'usinage pour l'usinage des roues, la tête de mesure pouvant être remplacée par l'outillage d'usinage sur le chariot mobile, et vice versa, au cours du procédé de mesure et d'usinage/reprofilage ;
- les galets d'entraînement sont entraînés par un moteur hydraulique ;
- le système de calage externe est compris dans la surface supérieure de chacun des bâtis latéraux et est positionné pour prendre appui sous les boîtes de roulement d'un essieu du véhicule ferroviaire afin de maintenir l'essieu fixe à la hauteur de référence déterminée durant l'opération d'usinage/reprofilage ;
- le chariot mobile est équipé d'une semelle porte-outils, d'un porte-outil, de deux porte-plaquettes, de deux plaquettes de coupe et d'un système de changement rapide ;
- un vérin pneumatique assure le mouvement vertical de la tête de mesure, ledit vérin pneumatique étant entièrement protégé à l'intérieur du chariot mobile ;
- la tête de mesure est équipée d'une molette, d'un palpeur et d'un capteur de faux-rond ;
- l'installation comprend un boîtier de rangement situé sur le chariot mobile pour le rangement de la tête de mesure, lorsqu'elle n'est pas utilisée ;
- le chariot mobile se déplace selon des mouvements horizontaux et verticaux effectués grâce à des vis à billes, des patins et à un moteur d'axe ;
- le tour modulaire (1) est adapté pour une largeur de voie donnée lors de sa fabrication, uniquement par modification de la longueur de la poutre centrale, tous les autres éléments modulaires restant identiques par ailleurs.

La présente invention se rapporte également à une méthode de montage et démontage de l'installation décrite ci-dessus, qui comprend un tour modulaire pour le reprofilage des roues d'un véhicule ferroviaire et deux socles, ladite méthode comprenant les étapes suivantes :
- le positionnement de précision du tour sur les deux socles dans la fosse grâce au système de centrage de précision, par l'emboîtement de chaque cavité prévue dans la base de chaque bâti latéral sur le plot correspondant compris dans la surface supérieure de chaque socle ;
- la solidarisation/désolidarisation grâce à des moyens amovibles des deux bâtis latéraux avec les deux socles respectifs.

Avantageusement, une fois que la prise de mesure et l'usinage/le reprofilage sont terminés et que le tour modulaire doit être enlevé de la fosse pour être remonté dans une autre fosse éventuellement située dans un autre atelier, le remontage du tour modulaire est effectué dans l'autre fosse, sur deux plots de socles coopérant avec les deux cavités correspondantes au niveau des bâtis latéraux, pour la même largeur de voie.

### Description détaillée de l'invention

Comme représenté sur les figures annexées, la présente invention se rapporte à un tour modulaire1 permettant le reprofilage de roues 3 de tout type de véhicule ferroviaire, le tour 1 étant situé dans une fosse 2 localisée sous des rails d'accès 5. Les rails d'accès 5, pour l'amenée et l'évacuation du véhicule, possèdent une section fixe assurant la continuité avec les rails de l'atelier et une section mobile 5A, pouvant être escamotée afin de permettre l'accès aux roues 3 par les galets d'entraînement 10 lors du reprofilage de celles-ci. Cette partie mobile 5A permet la continuité de la voie d'accès pour le passage des véhicules au-dessus de la fosse 2, par exemple en l'absence du tour, ainsi que le parfait alignement entre la voie entrante et la voie sortante de la fosse 2.

Le tour 1 de la présente invention présente la particularité d'être aisément démontable afin de pouvoir être facilement transporté et déplacé d'une fosse à une autre. Pour ce faire, le tour 1 est fixé de manière amovible sur deux socles 6 prévus à cet effet dans la fosse 2. Par « amovible », on entend « pouvant être enlevé et replacé à volonté », dans le sens où, selon l'invention, le tour 1 est désolidarisé des socles 6 pour être transporté en une seule partie. Ceci permet un démontage rapide et un remontage rapide dans un autre atelier. Toujours dans cette optique, il sera prévu que le tour 1 puisse être connecté/ déconnecté de l'armoire électrique et du groupe hydraulique par des connections rapides, connues en soi de l'homme de métier, telles que coupleurs hydraulique rapides ou prises multi-contact.

Les fixations de type amovible considérées selon l'invention sont par exemple des vis et boulons, ou tout autre moyen de fixation amovible connu de l'homme de métier, alors que le mécanosoudage par exemple doit être spécifiquement évité entre les éléments principaux à assembler.

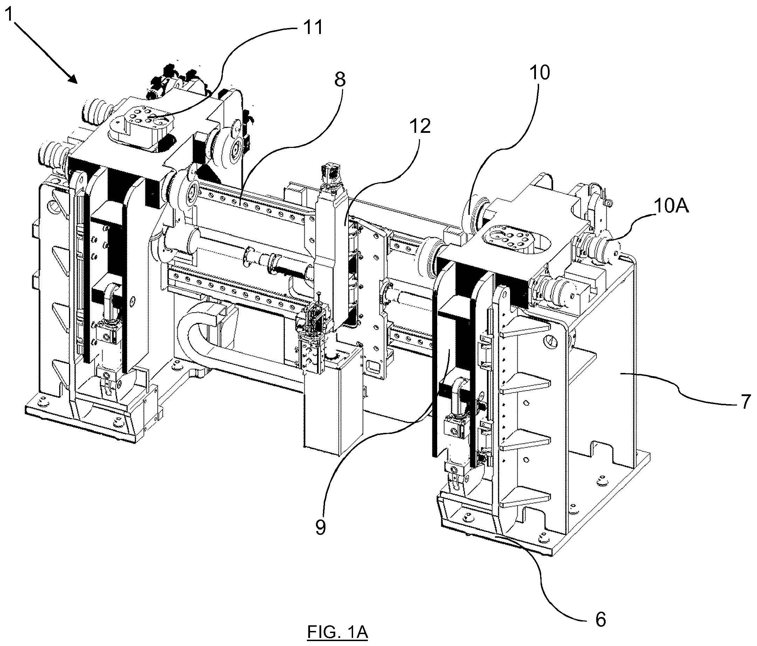

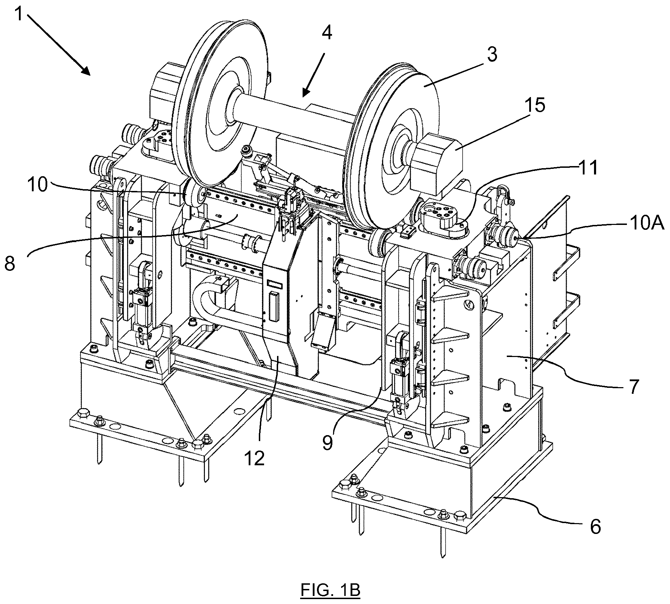

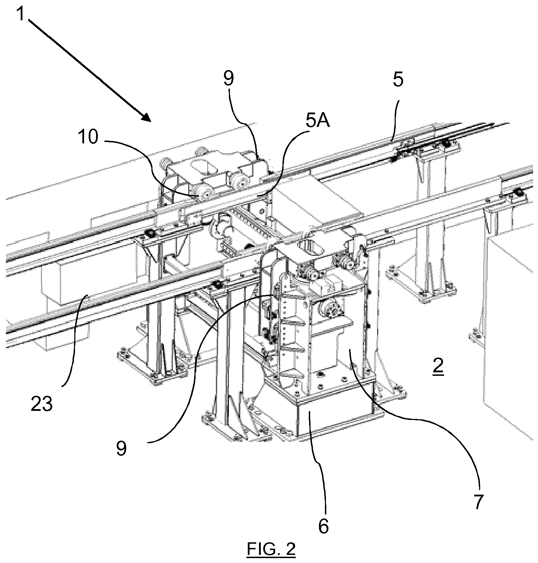

Tel qu'illustré sur les figures 1A, 1B et 2, le tour 1 selon l'invention est solidarisé de manière amovible à deux socles 6, eux-mêmes fixés ou ancrés au fond de la fosse 2, les deux socles 6 supportant la totalité de la masse de la machine. Le tour 1 selon l'invention, outre sa propriété d'être amovible, présente la caractéristique avantageuse d'être modulaire. Plus spécifiquement, il est constitué de sous-ensembles, notamment deux bâtis latéraux 7 destinés à être fixés de manière amovible sur les deux socles 6 précités ainsi qu'une poutre centrale 8 reliant latéralement les deux bâtis latéraux 7. Deux bras porte-galets d'entraînement 9 sont chacun fixés sur un des bâtis latéraux 7. Les galets d'entraînement 10 sont préférablement au nombre de deux par bras d'entraînement 9 et ont pour but de faire tourner chaque roue 3 lors de la prise de mesure et de l'usinage. Un système de calage externe 11 permet de maintenir l'essieu 4 du véhicule en place durant toute la phase d'usinage, à une hauteur de référence.

De manière plus détaillée, les deux bâtis latéraux 7 sont fixés de manière symétrique par rapport à un plan médian équidistant des deux rails sur les socles 6 qui sont scellés au sol dans la fosse 2. Cet ensemble assure la stabilité de la machine et l'absorption des vibrations générées par l'usinage. Lorsqu'on lève l'essieu, les socles 6 et le génie civil reprennent l'ensemble des charges. Les deux bâtis 7 reçoivent la poutre centrale 8 ainsi que le système de calage externe 11 et les bras porte-galets d'entraînement 9 permettant l'entraînement des roues 3 à usiner. Des vis d'ajustement et des cales, connues en soi de l'homme de l'art, sont mises en place sous les socles 6 et les bâtis 7 afin d'assurer leur nivellement par rapport au sol.

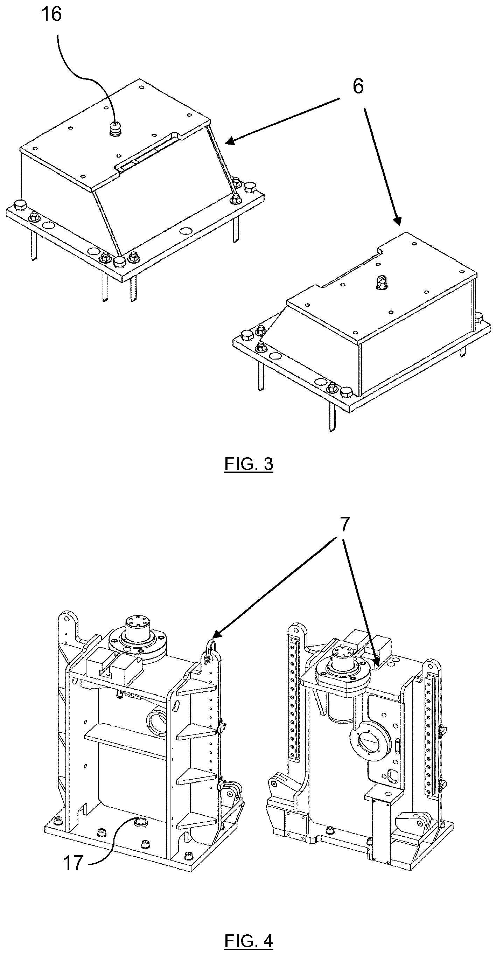

Selon l'invention, un système de centrage est prévu afin que le tour 1 soit facilement positionné et aligné sur les socles 6 dans la fosse 2. Ce système comprend des plots 16 qui sont prévus dans les socles 6, comme illustré sur la figure 3. À ces plots 16 correspondent des cavités ou renfoncements 17 prévus dans la base des bâtis latéraux 7, qui viennent alors s'emboîter sur les plots 16 pour positionner avec précision et rapidement le tour 1 dans la fosse 2, avant la fixation de la poutre centrale 8 reliant les bâtis.

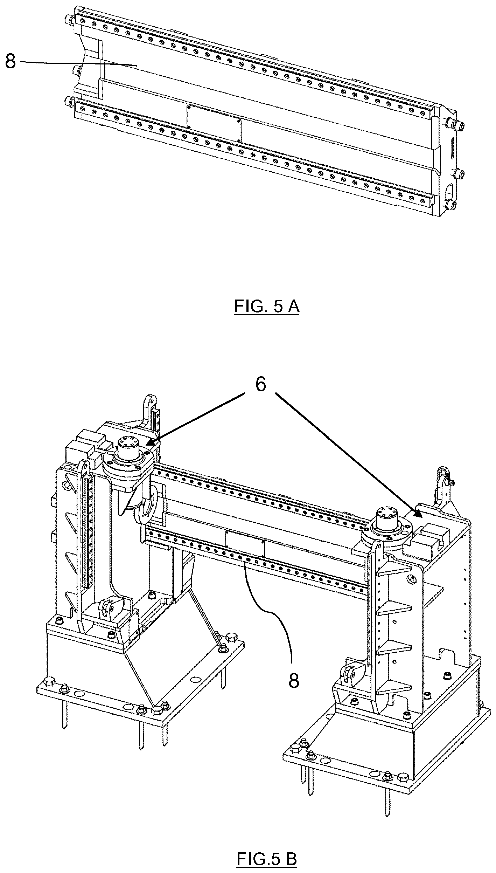

La poutre centrale 8, illustrée sur les figures 5A et 5B, est soutenue par les deux bâtis latéraux 7 en vue d'assurer l'homogénéité et la rigidité de l'ensemble du tour en fosse. La poutre 8 est conçue de manière à faciliter l'évacuation des copeaux d'usinage puisqu'elle se retrouve sous la zone d'usinage des roues 3. En fonction du tour à construire pour une largeur de voie donnée, la poutre centrale 8 peut avoir plusieurs longueurs différentes, afin de relier des bâtis latéraux 7 espacés à une distance plus ou moins grande en fonction de l'espacement des rails 5. Les bâtis latéraux 7 viennent alors simplement s'emboîter par leur cavité 17 sur les plots 16 et la poutre centrale 8 de dimension adéquate vient alors relier les bâtis 7 en question.

Selon l'invention, pour un tour donné correspondant à une largeur de voie donnée, il y a une seule poutre non démontable. La largeur du tour est donc définie à la conception. Cependant, la conception modulaire présente l'avantage de permettre une réalisation aisée de tours à partir des mêmes sous-ensembles pour différents types de largeur de voie (à écartement standard UIC, métrique, large, etc.).

De plus, au niveau de la fabrication des tours proprement dite, le concept de réalisation modulaire selon l'invention permet une adaptation très aisée à un cahier des charges prévoyant une autre largeur de voie, simplement en modifiant la longueur de la poutre centrale et sans modifier tous les autres éléments constitutifs du tour.

Les deux calages externes 11, fixés respectivement sur chacun des bâtis latéraux 7 permettent la mise en référence de l'essieu 4 au droit des boîtes de roulements 15 du véhicule et de maintenir celui-ci à la même hauteur durant toute la phase d'usinage. Lorsque le véhicule ferroviaire est amené au-dessus de la fosse 2, il est maintenu par ce système de calage 11, qui prend appui sous les boîtes de roulement 15 de l'essieu 4, avant que ne soit escamotée la partie mobile 5A des rails d'accès 5 pour donner au tour un libre accès aux roues 3 à profiler.

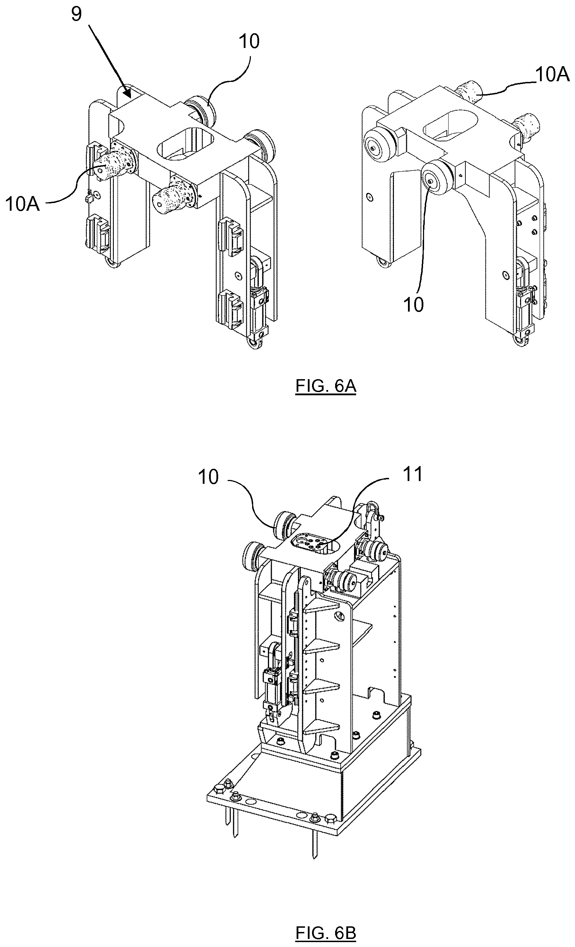

Les galets d'entraînement 10 sont supportés par les deux bras 9, comme représenté sur la figure 6A et sont préférentiellement au nombre de deux par bras 9. Ces galets 10 assurent le centrage longitudinal du véhicule ferroviaire et la rotation de la roue 3, par contact avec celle-ci. Les galets 10 sont entraînés de préférence par un moteur hydraulique 10A, permettant avantageusement un gain de place par rapport aux moteurs électriques utilisés dans l'art antérieur. Comme expliqué précédemment et illustré sur les figures 1 et 2, chaque bras 9 est monté sur un des bâtis latéraux 7. Le tour en fosse 1 de la présente invention sera pourvu de moyens pour disposer, via ces bras 9, d'une technologie permettant le centrage du véhicule par montée synchronisée hydrauliquement des quatre galets d'entraînement 10.

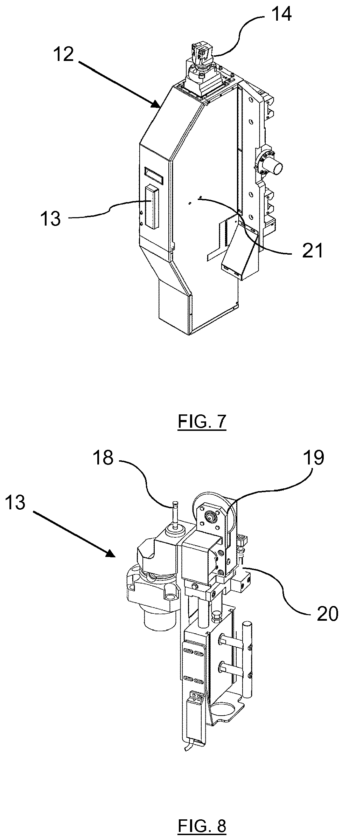

Toujours selon l'invention, un chariot mobile 12 unique est prévu dans le tour 1 de la présente invention, afin d'économiser de la place. Comme représenté sur les figures 7 et 8, ce chariot 12 peut être équipé soit d'une tête de mesure 13, pour la détection des défauts sur les roues et la mesure du positionnement des roues 3 dans l'espace, soit d'un outillage d'usinage 14, pour l'usinage des roues 3. La tête de mesure 13 et l'outillage d'usinage 14 sont échangés sur le chariot mobile 12 au cours du procédé de mesure et d'usinage. Dans ce tour en fosse particulier, la prise de mesure et l'usinage se font pour une roue à la fois, et ne peuvent pas être réalisés simultanément pour les deux roues d'un même essieu, comme c'est le cas dans certains tours en fosse de l'art antérieur. Ceci a pour but d'avoir un chariot mobile 12 unique, ce qui limite l'encombrement, le poids et le coût de l'installation.

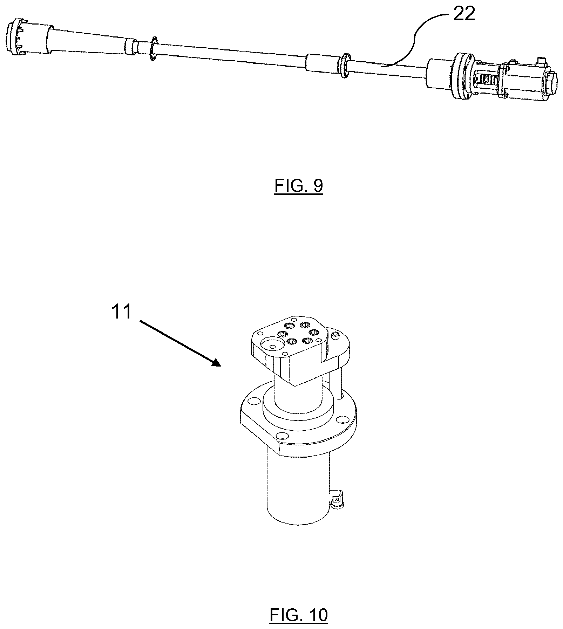

De manière préférée, le chariot mobile 12 est équipé d'un ensemble porte-outil 14 comprenant par exemple une semelle porte-outils, un porte-outil, deux porte-plaquettes, deux plaquettes de coupe et d'un système de changement rapide permettant également d'y installer la tête de mesure 13. Le chariot 12 permet de réaliser l'usinage de la bande de roulement, du boudin et de la face interne de la roue 3. Le chariot mobile 12 est monté coulissant sur la poutre centrale 8 et les mouvements en X (vertical) et Z (horizontal) se font par exemple par l'intermédiaire de vis à billes, de patins et d'un moteur d'axe (voir système d'axe horizontal 22, figure 9).

La tête de mesure 13, qui est apte à être installée sur le chariot mobile 12, est pilotée par une commande numérique selon un cycle automatique du tour 1 et permet une mesure simultanée de la roue 3. Un vérin pneumatique assure la montée/descente de la tête de mesure 13 et est entièrement protégé à l'intérieur du chariot 12.

Selon la forme d'exécution illustrée sur la figure 8, la tête de mesure 13 est équipée d'une molette 19, d'un palpeur 18 et d'un capteur de mesure du faux-rond 20 (potentiomètre) réalisant à eux seuls toutes les mesures caractéristiques d'un profil de roue 3, comme par exemple celles du diamètre et du faux rond, ainsi que celles du voile, des écartements de faces internes et des faces actives, de l'épaisseur et de la hauteur du boudin, etc. Afin de réaliser ces mesures, la molette 19 est équipée d'un codeur. Une cellule optique permet de compter les tours de roues ainsi que la vitesse de rotation. Pour ce faire, au préalable, l'opérateur aura placé un réflecteur aimanté sur la face interne des roues. La tête de mesure 13 est avantageusement rangée dans un boîtier de rangement 21 situé sur le chariot mobile 12 (figure 7) où elle est protégée des impacts de copeaux. Lors des phases de mesure, il est nécessaire de remplacer l'outil de coupe 14 par la tête d'usinage 13 sur le chariot mobile 12.

Une armoire électrique et un groupe hydraulique associé à un échangeur air/huile sont de préférence situés à l'extérieur de la fosse, afin de libérer de l'espace.

Un pupitre d'opérateur est situé dans la fosse 2, devant le tour 1 et sous la voie d'accès des véhicules. Celui-ci est monté avantageusement sur un bras articulé permettant à l'opérateur de déporter son poste de travail s'il le souhaite. Ce pupitre comprend un écran/clavier de la commande numérique ainsi que des accessoires de contrôle. Il permet la visualisation du cycle et le contrôle du tour en fosse. Avantageusement, un auto-diagnostic ou une télémaintenance peuvent être prévus.

### Avantages de l'invention

L'installation de tour selon l'invention a l'avantage de pouvoir être transportée et installée facilement dans tout type de fosse, et d'être adaptable à la taille de celle-ci. Un seul tour de ce type peut ainsi être utilisé avantageusement dans plusieurs fosses, voire dans plusieurs ateliers de maintenance, grâce à sa démontabilité et transportabilité. Cela mène à une réduction considérable des coûts pour le propriétaire/l'utilisateur qui peut disposer d'une seule machine même s'il possède plusieurs ateliers. L'installation de la présente invention propose donc une grande plage d'adaptabilité aux différents types de matériels roulants.

Ces avantages sont obtenus par la conception du tour qui est simplifiée et allégée en comparaison avec les tours de l'état de l'art (par exemple un seul chariot mobile, bâti allégé sur socles, etc.).

De plus, grâce à un système de centrage très simple, le tour est facilement positionné et aligné rapidement dans la fosse. C'est un point essentiel de la mise en œuvre de l'invention car le tour doit impérativement être correctement aligné pour pouvoir effectuer un reprofilage précis des roues.

L'installation de l'invention, grâce à sa compacité, permet aussi de réduire la taille de la fosse, et même une utilisation dans des fosses de dimensions classiques, telles que les fosses de visite classiques. L'installation selon la présente invention ne nécessite pas pour autant de devoir construire une fosse spécifique adaptée au tour et donc avec une dimension éventuellement plus élevée comme c'est le cas pour les tours décrits dans l'état de la technique.

### Liste des symboles de référence

1. Tour
2. Fosse
3. Roue(s) du véhicule ferroviaire
4. Essieu du véhicule
5. Rails d'accès - 5A. partie mobile des rails d'accès
6. Socle(s)
7. Bâtis latéraux
8. Poutre centrale
9. Bras porte-galets d'entraînement
10. Galets d'entraînement - 10A. moteurs hydrauliques
11. Système de calage externe
12. Chariot mobile
13. Tête de mesure
14. Porte-outils (outil de coupe)
15. Boîte de roulements du véhicule
16. Plots de centrage (dans les socles)
17. Cavité ou renfoncement de centrage (dans les bâtis latéraux)
18. Palpeur (sur la tête de mesure)
19. Molette (sur la tête de mesure)
20. Capteur de mesure du faux-rond (sur la tête de mesure)
21. Boîtier de rangement et protection de la tête de mesure
22. Système d'axe horizontal
23. Pupitre opérateur

## Revendications

1. Installation constituée d'un ensemble comprenant un tour modulaire (1) pour le reprofilage des roues d'un véhicule ferroviaire et deux socles (6), ledit tour étant adapté pour être placé dans une fosse (2) au-dessus de laquelle passent des rails d'accès (5), qui correspondent à une largeur de voie déterminée, et lesdits socles (6) étant adaptés pour être fixés dans le fond de ladite fosse (2) à une certaine distance l'un de l'autre transversalement par rapport à la direction définie par les rails d'accès, ledit tour modulaire (1) comprenant au moins les éléments modulaires constitutifs suivants :
- deux bâtis latéraux (7) aptes à être solidarisés de manière amovible respectivement sur chacun des deux socles (6) ;
- une poutre centrale (8) apte à être solidarisée de manière amovible aux deux bâtis latéraux (7) de manière à créer une liaison transversale ;
- deux bras porte-galets d'entraînement (9) fixés de manière amovible respectivement sur chacun des bâtis latéraux (7), et comprenant chacun deux galets d'entraînement (10) permettant, en utilisation, de faire tourner une roue (3) du véhicule ferroviaire ;
- un système de calage externe (11) permettant, en utilisation, de maintenir un essieu (4) du véhicule ferroviaire à une hauteur de référence déterminée ;
de sorte que ledit tour modulaire (1) puisse être démonté, respectivement remonté et solidarisé, de manière amovible, d'une pièce par rapport aux deux socles (6) ;
ledit ensemble comprenant en outre un système de centrage de précision pour positionner et aligner ledit tour modulaire (1) dans la fosse (2) sur lesdits socles (6) à chaque fois qu'il doit être remonté.

2. Installation selon la revendication 1, **caractérisée en ce que** le système de centrage de précision comprend au moins un plot (16) compris dans une surface supérieure de chaque socle (6) et au moins une cavité (17) correspondante prévue dans la base de chaque bâti latéral (7), ladite cavité (17) coopérant par emboîtement avec ledit plot (16) afin de positionner avec précision, et avant fixation, le tour modulaire (1) sur les socles (6) dans la fosse (2).

3. Installation selon l'une quelconque des revendications précédentes, **caractérisée en ce que** le tour modulaire (1) comprend un chariot mobile unique (12) pouvant se déplacer transversalement d'une roue à l'autre d'un essieu et équipé soit d'une tête de mesure (13) pour la détection de défauts sur les roues (3) et pour la mesure du positionnement de la roue (3) dans l'espace, soit d'un outillage d'usinage (14) pour l'usinage des roues (3), la tête de mesure (13) pouvant être remplacée par l'outillage d'usinage (14) sur le chariot mobile (12), et vice versa, au cours du procédé de mesure et d'usinage/reprofilage.

4. Installation selon l'une quelconque des revendications précédentes, **caractérisée en ce que** les galets d'entraînement (10) sont entraînés par un moteur hydraulique (10A).

5. Installation selon l'une quelconque des revendications précédentes, **caractérisée en ce que** le système de calage externe (11) est compris dans la surface supérieure de chacun des bâtis latéraux (7) et est positionné pour prendre appui sous les boîtes de roulement (15) d'un essieu (4) du véhicule ferroviaire afin de maintenir l'essieu (4) fixe à la hauteur de référence déterminée durant l'opération d'usinage/reprofilage.

6. Installation selon l'une quelconque des revendications 3 à 5, **caractérisée en ce que** le chariot mobile (12) est équipé d'une semelle porte-outils, d'un porte-outil, de deux porte-plaquettes, de deux plaquettes de coupe et d'un système de changement rapide.

7. Installation selon l'une quelconque des revendications 3 à 6, **caractérisée en ce qu'**un vérin pneumatique assure le mouvement vertical de la tête de mesure (13), ledit vérin pneumatique étant entièrement protégé à l'intérieur du chariot mobile (12).

8. Installation selon l'une quelconque des revendications 3 à 7, **caractérisée en ce que** la tête de mesure (13) est équipée d'une molette (19), d'un palpeur (18) et d'un capteur de faux-rond (20).

9. Installation selon l'une quelconque des revendications 3 à 8, **caractérisée en ce qu'**elle comprend un boîtier de rangement (21) situé sur le chariot mobile (12) pour le rangement de la tête de mesure (13), lorsqu'elle n'est pas utilisée.

10. Installation selon l'une quelconque des revendications 3 à 9, **caractérisée en ce que** le chariot mobile (12) se déplace selon des mouvements horizontaux et verticaux effectués grâce à des vis à billes, des patins et à un moteur d'axe.

11. Installation selon l'une quelconque des revendications précédentes, **caractérisée en ce que** le tour modulaire (1) est adapté pour une largeur de voie donnée lors de sa fabrication, uniquement par modification de la longueur de la poutre centrale (8), tous les autres éléments modulaires (7, 9, 11, ...) restant identiques par ailleurs.

12. Méthode de montage et démontage de l'installation selon l'une quelconque des revendications 2 à 11, l'installation comprenant un tour modulaire (1) pour le reprofilage des roues d'un véhicule ferroviaire et deux socles (6), ladite méthode comprenant les étapes suivantes :
- le positionnement de précision du tour (1) sur les deux socles (6) dans la fosse (2) grâce au système de centrage de précision, par l'emboîtement de chaque cavité (17) prévue dans la base de chaque bâti latéral (7) sur le plot (16) correspondant compris dans la surface supérieure de chaque socle (6) ;
- la solidarisation/désolidarisation grâce à des moyens amovibles des deux bâtis latéraux (7) avec les deux socles (6) respectifs.

13. Méthode de montage et démontage selon la revendication 12 **caractérisée en ce que**, une fois que la prise de mesure et l'usinage/le reprofilage sont terminés et que le tour modulaire (1) doit être enlevé de la fosse (2) pour être remonté dans une autre fosse éventuellement située dans un autre atelier, le remontage du tour modulaire (1) est effectué dans l'autre fosse (2), sur deux plots (16) de socles (6) coopérant avec les deux cavités (17) correspondantes au niveau des bâtis latéraux (7), pour la même largeur de voie.
